# EUROPEAN PATENT APPLICATION

(11) **EP 2 997 852 A1**
(43) Date of publication of application: **23.03.2016**
(21) Application number: 15185394.2
(22) Date of filing: 16.09.2015
(51) Int. Cl.: A47B 31/00, A47B 87/02, B62B 3/00, F24C 15/16, F16B 12/40

(54) **A MULTI-FUNCTION MODULAR STRUCTURE FOR SUPPORTING FOOD PRODUCTS**

(30) Priority: 19.09.2014 IT BO20140515
(71) Applicant: G.L.E.N. S.N.C. di Guaraldi Gianni e Cristian E C., 44045 Renazzo - Cento (Ferrara) (IT)
(72) Inventor: GUARALDI, Cristian, 40014 Crevalcore (Bologna) (IT)
(74) Representative: Dall'Olio, Christian

(57) **Abstract**

A multi-function modular structure (1) for supporting food products, comprising: a first wall (3) and a second wall (4), fixable to the base element (2) in such a way that the first wall (3) and second wall (4) face one another and are arranged vertically when the structure (1) is in use or ready for use, and in such a way that a shelf is transversally positionable between them for supporting the food products; a plurality of first guides (5) fixable to the first wall (3) and to the second wall (4); a covering element (7), removably fixable to the first wall (3) and the second wall (4), on the opposite side with respect to the base element, so as to face the base element; a third wall (30) and a fourth wall (40), each vertically positionable resting when the structure is in use or ready to use and alignable respectively to the first wall (3) and the second wall (4) on the opposite side of the base element (2); a plurality of second guides (6) fixable to the third wall (30) and the fourth wall (40); removable fixing means (8), for removably fixing the third wall (30) and the fourth wall (40) respectively to the first wall (3) and the second wall (4) once aligned therewith; and wherein the covering element (7) is further removably fixable to the third wall (30) and the fourth wall (40), on an opposite side with respect to the first wall (3) and the second wall (4), so as to face the base element (2).

## Description

The present invention relates to the technical sector of food products. In particular, the invention relates to a multi-function modular structure for supporting food products

Support structures for food and drink products are also known, for example food products for oven cooking. These structures are substantially constituted by a base provided with wheels from which two vertical walls, opposite one another, emerge, and by a plurality of horizontal guides fixed to the walls, for supporting shelves on which food products are arranged.

A covering element is further present, fixed on the walls, on the opposite side with respect to the base.

However, this known-type structure has some drawbacks.

In fact, in a case where the structure is to be used in environments of different dimensions (for example ovens or refrigerators), it can occur that the structure is too large and not compatible with the dimensions of the environments: it is therefore necessary to use another structure. Another possible case is where a structure having a particularly small size does not allow optimal exploitation of a large environment, for example in an oven having dimensions that are such as to enable cooking of a considerable quantity of oven products, not all supportable in the same structure: in this case too another structure has to be used.

Apart from constituting a practical disadvantage, this drawback clearly reflects also on costs.

Further, considerable space is necessary in a case of transporting the structure of known type, given its dimensions. This problem is clearly aggravated if more than one structure of known type has to be transported.

The aim of the present invention is to obviate the above-described drawbacks.

The aim is attained by a multi-function modular structure for supporting food products according to independent claim 1.

The multifunction modular structure of the present invention advantageously enables adapting to environments of varying dimensions, without any need to have various structures available, as occurred in the prior art. Further, the proposed structure is particularly compact in the case of transport.

These aspects provide significant advantages, both practical and economic.

Specific embodiments of the invention and further advantageous characteristics will be more fully described in the following, with the aid of the appended tables of drawings, in which:

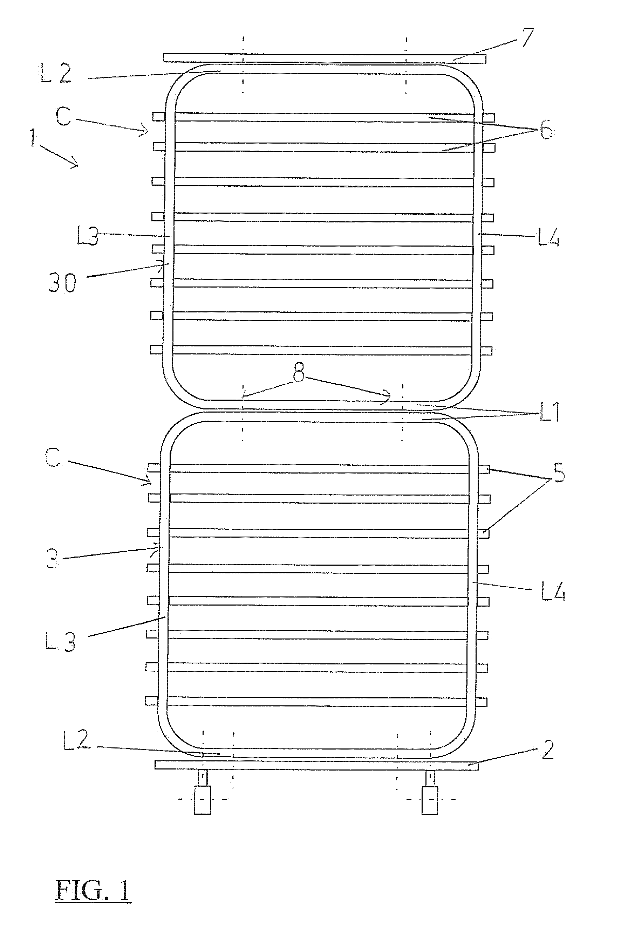

- figure 1 is a partial lateral view of a multi-function modular structure for supporting food products according to the invention;
- figure 2 is an exploded view of figure 1;

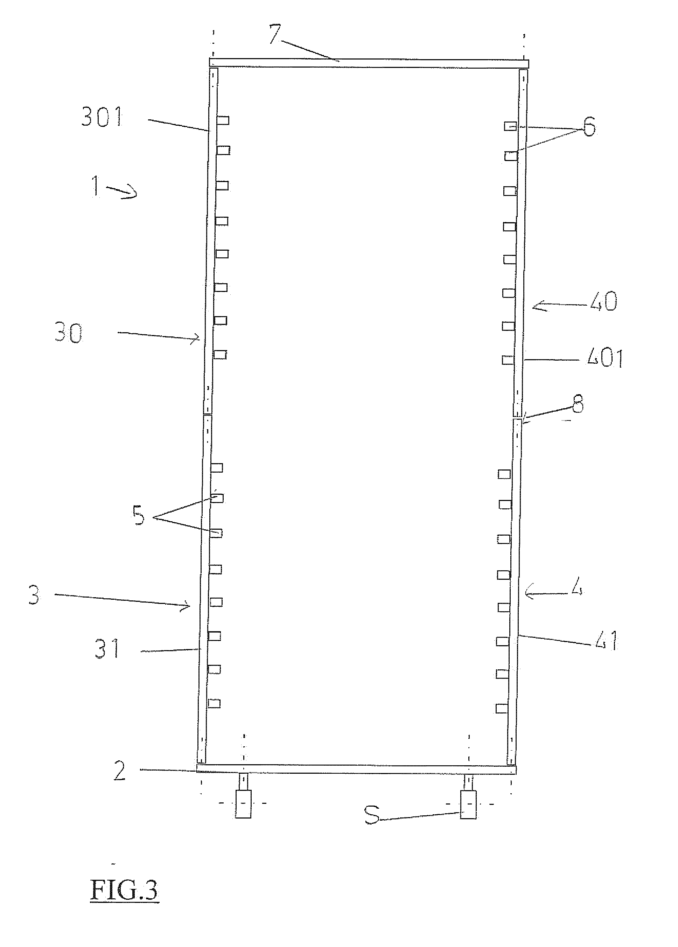

- figure 3 is a frontal view of the structure of figure 1;
- figure 4 is an exploded view of figure 3;
- figure 5 is a plan view of three walls, by way of example, usable in a multi-function modular structure for supporting food products according to the invention;
- figure 6 is a plan view of two walls, according to two variants, usable in a multi-function modular structure for supporting food products according to the invention;
- figure 7 is a partial view of a system according to the invention.

With reference to the appended figures of the drawings, reference numeral (1) relates to a multi-function modular structure for supporting food products according to the invention.

The modular structure (1) comprises: a base (2); a first wall (3) and a second wall (4), fixable to the base element (2) in such a way that the first wall (3) and second wall (4) face one another and are arranged vertically when the structure (1) is in use or ready for use, and in such a way that a shelf is transversally positionable between them for supporting the food products; Further, the multifunction modular structure (1) comprises: a plurality of first guides (5) fixable to the first wall (3) and to the second wall (4), conformed and reciprocally arranged such as to support, two by two, a shelf (not illustrated) for supporting food products, which shelf is positioned transversally between the first wall (3) and the second wall (4).

The multifunction modular structure (1) further comprises a covering element (7), removably fixable to the first wall (3) and the second wall (4), on the opposite side with respect to the base element (2), so as to face the base element (2).

In particular, la multifunction modular structure (1) according to the invention further comprises: a third wall (30) and a fourth wall (40), each vertically positionable resting respectively on the first wall (3) and the second wall (4) on the opposite side of the base element (2) so as to be aligned with the first wall (3) and the second wall (4); and a plurality of second guides (6) fixable to the third wall (30) and the fourth wall (40), conformed and reciprocally arranged such as to support, two-by-two, a shelf for supporting food products, which shelf is positioned transversally between the third wall (30) and the fourth wall (40).

The multifunction modular structure (1) further comprises removable fixing means (8), for removably fixing the third wall (30) and the fourth wall (40) respectively to the first wall (3) and the second wall (4) once aligned therewith and resting thereon. Further, the covering element (7) is further removably fixable to the third wall (30) and the fourth wall (40), on an opposite side with respect to the first wall (3) and the second wall (4), so as to face the base element (2) and be resting on the first (3) and second wall (4).

Further, the first wall (3), the second wall (4), the third wall (30) and the fourth wall (40) being each constituted by a framework (31, 41, 301, 401) which forms a frame (C); a first side (L1) of the frame (C) being conformed by the third wall (30), arranged horizontally, which is positionable resting on a first side (L1) of the frame (C) conformed by the first wall (3), and with a first side (L1) of the frame (C) conformed by the fourth wall (40), arranged horizontally, which is positionable resting on a first side (L1), arranged horizontally, of the frame (C) conformed by the second wall (4). The removable fixing means (8) comprise a plurality of holes afforded in the first side (L1) of the frame (C) of each wall (3, 30, 4, 40), and a plurality of fastening screws or pins (81) insertable in the holes, in order to enable the coupling between the third wall (30) and the first wall (3) and between the fourth wall (40) and the second wall (4).

In other words, the first side (L1) of the frame (C) defined by the first wall (3) restingly receives, on a relative upper surface, the first side (L1) of the frame (C) defined by the third wall (30), at a lower surface thereof. This means that all the first side (L1) of the frame (C) defined by the first wall (30) is arranged resting on the first side (L1) of the frame (C) defined by the first wall (3) (the sides are horizontally arranged when the carriage is in use or ready to use). The upper surface of the first side (L1) of the frame (C) defined by the first wall (3) is therefore in contact with the lower surface of the first side (L1) of the frame (C) defined by the third wall (30). The upper surface of the first side (L1) of the frame (C) defined by the second wall (4) is therefore in contact with the lower surface of the first side (L1) of the frame (C) defined by the fourth wall (40).

The second wall (4) and the fourth wall (40) are also conformed in the above-described way.

This aspect advantageously gives the multifunction modular structure (1) excellent stability, making it particularly suitable for use in the food sector. In fact as the first side (L1) defined by the third wall (30) is restingly received on the first side (L1) of the frame (C) defined by the first wall (3), and the first sides (L1) are couplable to one another and horizontally arranged, the structure (1) of the invention is able to support even very great loads. As is known, in the food and drink structure these structures are often used to receive shelves on which large quantities of food products are arranged.

The weight of what is supported by the third wall (30) is thus unloaded onto all the first side (L1) of the frame (C) of the first wall (3).

Further, the multifunction modular structure (1) of the invention advantageously guarantees excellent flexibility from the dimensional point of view, enabling adaptation thereof to different environments. In fact, as the third wall (30) and the fourth wall (40) are removably fixable to the first wall (3) and the second wall (4), they can be removed from them if necessary. This need can arise, for example, in a case in which the multifunction modular structure (1) is used for supporting oven-cooked food products (by means of appropriate shelves, not illustrated) and has to be introduced into a small-dimension oven (or in any case small with respect to standard ovens).

In the prior art, on the other hand, in a situation such as this it was necessary to have available another structure, with significant costs. In the same way a particularly large environment might not be fully exploited if a small-dimension prior art structure is present.

The transport of one or more multifunction modular structures (1) is also particularly practical and economical, as the first wall (3), the second wall (4), the third wall (30), the fourth wall (40), the base element (2) and the covering element (7) can be de-assembled from one another, thus considerably reducing the overall dimensions.

The multifunction modular structure (1) has many uses: it can be used not only for supporting/storing food products, but for example can also be used for canteen/catering services, as it is particularly versatile.

Further, one of the possible applications is to use exclusively the first wall (3) and the second wall (4), without fixing the third wall (30) and the fourth wall (40). In this way, when required, a structure (1) is obtained having a particularly limited size that is therefore practical in cases of small available spaces. For example, the above-described structure can be about 80 cm high from the ground. The multifunction modular structure (1) can comprise a removable work plane (not illustrated) which can be used for example when the third wall (30) and the fourth wall (40) are not fixed to the first wall (3) and to the second wall (4) (the situation just described).

In particular, the work plane is dimensioned so as to be able to be arranged above the first wall (3) and the second wall (40) (in the presence or absence of the covering element (7)).

The multifunction modular structure (1) advantageously therefore provides a further functionality, since any operation can be carried out on the work plane, for example preparation of food products. The shelves can however be kept below the work plane, supported by the first guides (5). This aspect further increases the dynamic attribute and the flexibility of the multifunction modular structure (1) of the present invention with respect to what has been in existence up to now.

In the preferred embodiment of the invention, the first side (L1) of the frame (C) conformed by each wall (3, 30, 4, 40) is parallel to the base element (2).

With reference to the accompanying figures, the first guides (5) and the second guides (6) are linear guides which can comprise an end-run stop.

Again with reference to the figures, the base element (2) and the covering element (7) are each constituted by a laminar plate arranged horizontally (substantially parallel to the ground) when the structure (1) is in use or ready for use and can be removably fixable to the walls (3, 30, 4, 40) by suitable anchoring means (9) which can comprise, for example, screws or pins and appropriately arranged holes. On the other hand, the first wall (3) and the second wall (4) are arranged substantially perpendicular to the base element (7) when the structure is in use or ready for use.

In detail, the base element (2) and the covering element (7) can be interchangeable with one another and can be chosen time by time according to the use the multifunction modular structure (1) is destined for.

With reference to the accompanying figures of the drawings, the frame (C) defined by each framework (31, 41, 301, 401) has a substantially quadrangular perimeter, with the first side (L1) and a second side (L2) arranged horizontally when the structure (1) is in use or ready for use, and a third side (L3) and a fourth side (L4) arranged vertically when the structure (1) is in use or ready for use.The multifunction modular structure (1) can be made of stainless steel, for example in a case in which it is to be used internally of an oven during cooking of food products. Alternatively the multifunction modular structure (1) can be made of any other material suitable for resisting high temperatures. The multifunction modular structure (1) can clearly be made of any material in which the use thereof does not include supporting oven products (for example when it is used for catering, canteen or storage services of food products in general).

According to the preferred embodiment of the invention, the modular multifunction structure (1) comprises a plurality of wheels (not illustrated, for example 4) fixable to the base element (7) by appropriate support and anchoring means (S) (illustrated schematically). This specification advantageously facilitates the displacement of the multifunction modular structure (1).

The multifunction modular structure (1) can further comprise a plurality of shelves (not illustrated) for supporting food products, suitable for being arranged transversally between the first wall (3) and the second wall (4) or between the third wall (30) and the fourth wall (40) and supportable by the first guides (5) or the second guides (6).

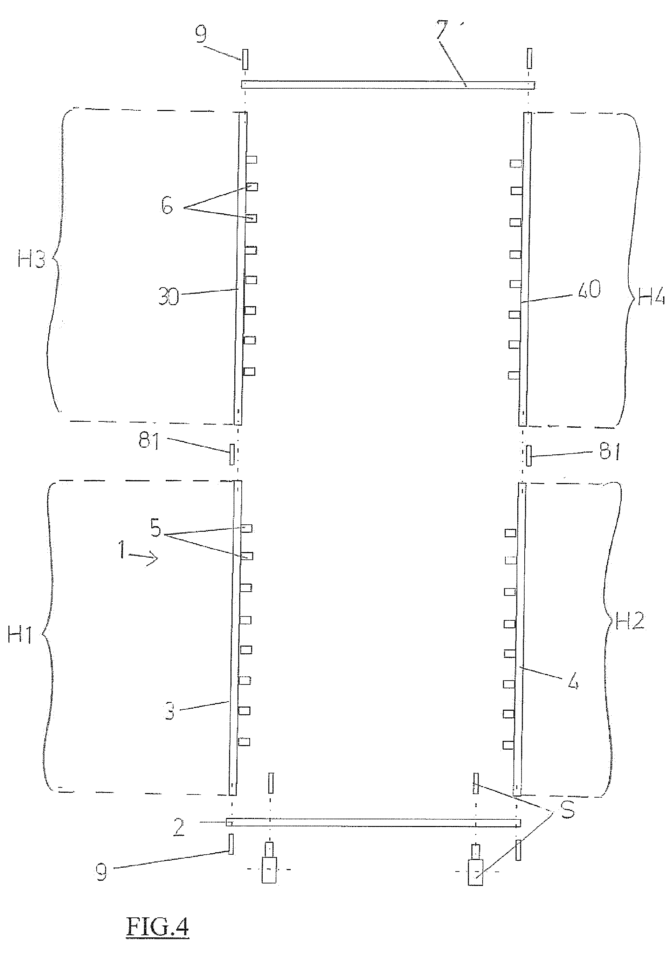

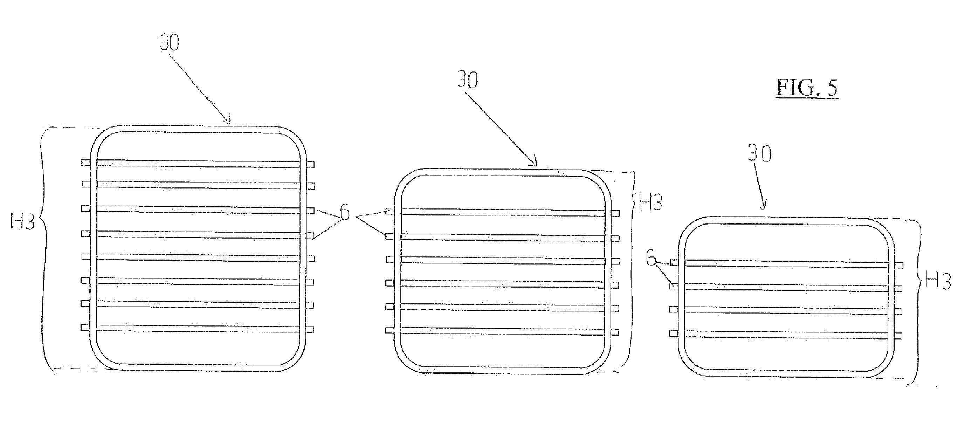

The height (H1) of the first wall (3) and the height (H2) of the second wall (4), measured with the first wall (3) and the second wall (4) arranged vertically with respect to the ground and resting on the ground, are preferably the same (see figure 4); and the height (H3) of the third wall (30) and the height (H4) of the fourth wall (40) measured with the first wall (3) and the second wall (4) arranged vertically with respect to a ground surface and resting on the ground surface, are identical. For example, the height (H3) of the third wall (30) and the height (H4) of the fourth wall (40) is the same as or less than the height (H1) of the first wall (3) and the height (H2) of the second wall (4). It is clearly possible to choose walls having suitable heights for the needs; figure 5, for example, illustrates examples of three different heights (H3) of three walls (30).

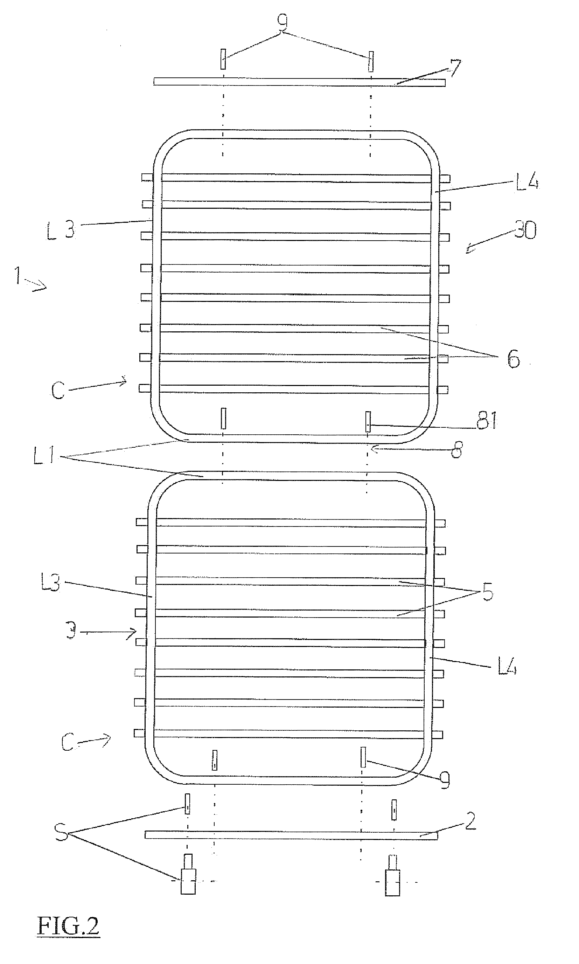

In the preferred embodiment of the invention, each frame (C) is defined by a tubular element made in a single body (see for example figure 2). This specification gives special sturdiness to the structure (1).

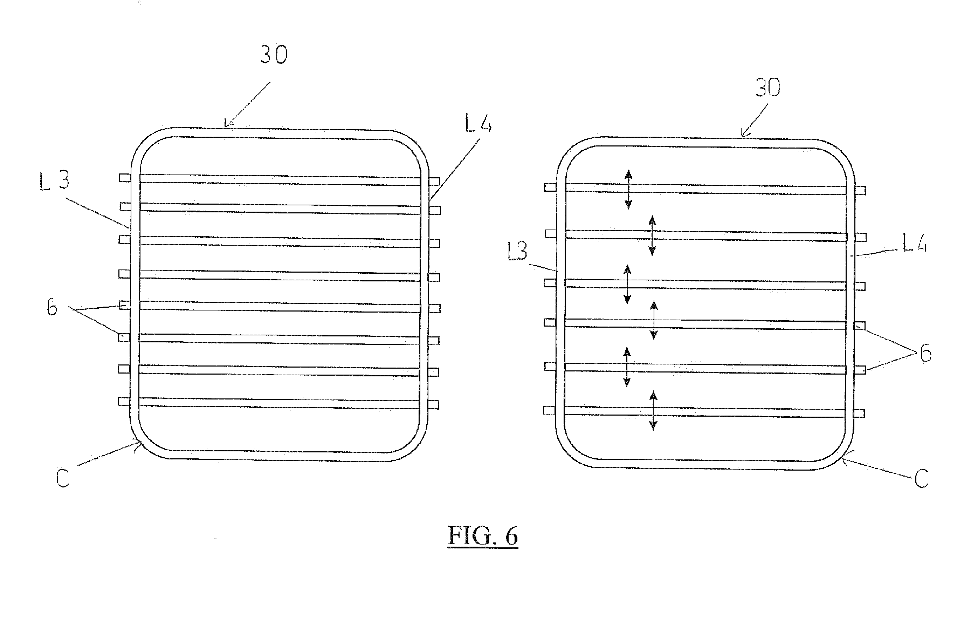

Alternatively, in a variant illustrated in figure 6, the third side (L3) and the fourth side (L4) of each frame (C) are parallel to one another and are height-adjustable. For example, the third side (L3) and the fourth side (L4) of each frame (C) are telescopic. This variant guarantees a further flexibility to the structure (1). In fact, in this way the distance between the first guides (5) and the distance between the second guides (6) are adjustable and can be different. This means, for example, that in the lowest part of the structure (1) shelves that are closest to one another can be included, and in the highest part of the structure (1) shelves that are more distanced from one another can be included (or vice versa). The distance between the first guides (5) and the distance between the second guides (6) can be decided time by time according to the size of the products to be supported. For example, in the part of the structure (1) in which the shelves are closest to one another, products having a limited size (for example bread sticks or the like) can be arranged, while in the upper part products having larger dimensions can be arranged (or vice versa). This solution is in no way obtainable with a known-type structure.

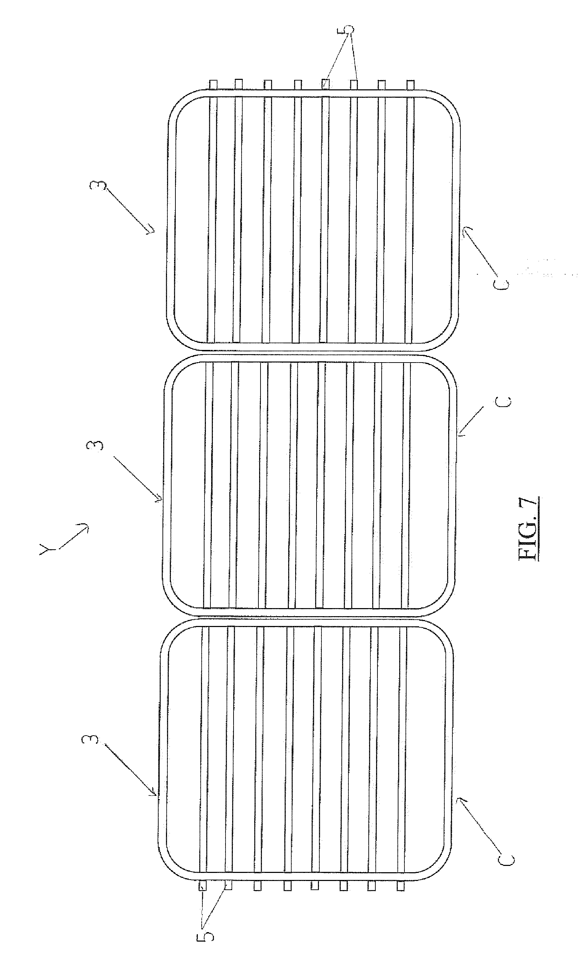

The invention further relates to a system (Y) comprising a plurality of modular structures (1), illustrated in part in figure 7. The system (Y) further comprises anchoring means (not visible) for removably anchoring the modular structures (1) to one another once arranged flanked and adjacent. For example, the anchoring means can comprise hooks, screws or pins. In practice, the first walls (3) of the plurality of systems are flanked, aligned and anchored to one another (see figure 7) and likewise the second walls (4).

This variant is advantageously effective when the third wall (30) and the fourth wall (40) of each structure (1) are removed from the corresponding first wall (3) and the second wall (4). In fact, the system (Y) thus-obtained can give rise to both a large work plane, constituted by the base elements (7) of the different flanked and adjacent structures (1), and to a storage system thanks to the plurality of available shelves support by the first guides (5).

It is understood that the foregoing has been described by way of non-limiting example, and that any eventual constructional variants are understood to fall within the protective scope of the present invention.

## Claims

1. A multi-function modular structure (1) for supporting food products, comprising:
a base element (2);
a first wall (3) and a second wall (4), fixable to the base element (2) in such a way that the first wall (3) and second wall (4) face one another and are arranged vertically when the structure (1) is in use or ready for use, and in such a way that a shelf is transversally positionable between them for supporting the food products;
a plurality of first guides (5) fixable to the first wall (3) and to the second wall (4), conformed and reciprocally arranged such as to support, two by two, a shelf for supporting food products, which shelf is positioned transversally between the first wall (3) and the second wall (4);
a covering element (7), removably fixable to the first wall (3) and the second wall (4), on the opposite side with respect to the base element (2), so as to face the base element (2);
**characterised in that** it further comprises:
a third wall (30) and a fourth wall (40), each vertically positionable resting respectively on the first wall (3) and the second wall (4) on the opposite side of the base element (2) so as to be aligned with the first wall (3) and the second wall (4);
a plurality of second guides (6) fixable to the third wall (30) and the fourth wall (40), conformed and reciprocally arranged such as to support, two-by-two, a shelf for supporting food products, which shelf is positioned transversally between the third wall (30) and the fourth wall (40);
removable fixing means (8), for removably fixing the third wall (30) and the fourth wall (40) respectively to the first wall (3) and the second wall (4) once aligned therewith and resting thereon;
and wherein the covering element (7) is further removably fixable to the third wall (30) and the fourth wall (40), on an opposite side with respect to the first wall (3) and the second wall (4), so as to face the base element (2);
the first wall (3), the second wall (4), the third wall (30) and the fourth wall (40) being each constituted by a framework (31, 41, 301, 401) which forms a frame (C); a first side (L1) of the frame (C) being conformed by the third wall (30), arranged horizontally, which is positionable resting on a first side (L1) of the frame (C) conformed by the first wall (3), arranged horizontally, so that a lower surface of the first side (L1) of the frame (C) conformed by the third wall (30) is in contact with an upper surface of the first side (L1) of the frame (C) conformed by the first wall (3); and with a first side (L1) of the frame (C) conformed by the fourth wall (40), arranged horizontally, which is positionable resting on a first side (L1) of the frame (C) conformed by the second wall (4), arranged horizontally, so that a lower surface of the first side (L1) of the frame (C) conformed by the fourth wall (40) is in contact with an upper surface of the first side (L1) of the frame (C) conformed by the second wall (4);
and wherein the removable fixing means (8) comprise a plurality of holes afforded in the first side (L1) of the frame (C) of each wall (3, 30, 4, 40), and a plurality of fastening screws or pins (81) insertable in the holes, in order to enable the coupling between the third wall (30) and the first wall (3) and between the fourth wall (40) and the second wall (4).

2. The structure (1) of the preceding claim, wherein the first side (L1) of the frame (C) conformed by each wall (3, 30, 4, 40) is parallel to the base element (2).

3. The structure (1) of claim 1 or 2, wherein each frame (C) is defined by a tubular element made in a single body.

4. The structure (1) of any one of the preceding claims, wherein each frame (C) comprises a third side (L3) and a fourth side (L4), parallel to one another, which are height-adjustable so as to enable regulating a distance between the first guides (5) and a distance between the second guides (6).

5. The structure (1) of the preceding claim, wherein the third side (L3) and the fourth side (L4) are telescopic.

6. The structure (1) of any one of the preceding claims, wherein the structure (1) is made of stainless steel, so as to be usable internally of an oven during cooking of food products.

7. The structure (1) of any one of the preceding claims, comprising a plurality of wheels fixable to the base element (2).

8. The structure (1) of any one of the preceding claims, further comprising a plurality of shelves for supporting food products, arrangeable transversally between the first wall (3) and the second wall (4) or between the third wall (30) and the fourth wall (40) and supportable by the first guides (5) or the second guides (6).

9. The structure (1) of any one of the preceding claims, wherein the height (H1) of the first wall (3) and the height (H2) of the second wall (4), measured with the first wall (3) and the second wall (4) arranged vertically with respect to the ground and resting on the ground, are the same; and wherein the height (H3) of the third wall (30) and the height (H4) of the fourth wall (40) measured with the first wall (3) and the second wall (4) arranged vertically with respect to a ground surface and resting on the ground surface, is identical; the height (H3) of the third wall (30) and the height (H4) of the fourth wall (40) being identical to or lower than the height (H1) of the first wall (3) and the height (H2) of the second wall (4).
